# EUROPEAN PATENT APPLICATION

(11) **EP 4 422 256 A1**
(43) Date of publication of application: **28.08.2024**
(21) Application number: 21961056.5
(22) Date of filing: 22.10.2021
(51) Int. Cl.: H04W 24/10

(54) **COMMUNICATION METHOD AND COMMUNICATION APPARATUS FOR WIRELESS LOCAL AREA NETWORK SENSING MEASUREMENT**

(71) Applicant: Beijing Xiaomi Mobile Software Co., Ltd., Beijing 100085 (CN)
(72) Inventor: DONG, Xiandong, Beijing 100085 (CN)
(74) Representative: Kudlek, Franz Thomas
(86) International application number: PCT/CN2021/125736
(87) International publication number: WO 2023/065308

(57) **Abstract**

Provided in the present disclosure are a communication method and communication apparatus for wireless local area network sensing measurement. The communication method comprises: determining at least one sensing measurement process setup message frame, wherein the at least one sensing measurement process setup message frame respectively corresponds to at least one sensing measurement process, each sensing measurement process comprises at least one sensing measurement event, and each sensing measurement process setup message frame comprises information associated with the at least one sensing measurement event; and sending the at least one sensing measurement process setup message frame.

## Description

### TECHNICAL FIELD

The present disclosure relates to the field of wireless communication, and in particular, to a communication method and a communication apparatus for wireless local area network sensing measurement.

### BACKGROUND

Wireless Local Area Network (WLAN) has the characteristics of flexibility, mobility and low cost, etc. With the development of communication technology and the growth of user demand, research on the application of WLAN is gradually deepening. For example, WLAN sensing is currently being studied, and its main application scenarios include: location discovery in dense environments (home environments and enterprise environments), proximity detection, and presence detection, and the like.

### SUMMARY

Aspects of the present disclosure will address at least the aforementioned problems and/or disadvantages. Various embodiments of the present disclosure provide the following technical schemes.

A communication method is provided according to an exemplary embodiment of the present disclosure. The communication method may be performed by a wireless local area network (WLAN)-sensing initiator, and comprises: determining at least one message frame for setup of a sensing measurement procedure, wherein the at least one message frame respectively corresponds to at least one sensing measurement procedure, each of the at least one sensing measurement procedure comprises at least one sensing measurement event, and the message frame corresponding to each of the at least one sensing measurement procedure comprises information associated with the at least one sensing measurement event of the corresponding sensing measurement procedure; and transmitting the at least one message frame.

A communication method is provided according to an exemplary embodiment of the present disclosure. The communication method may be performed by a wireless local area network (WLAN)-sensing responder and comprises receiving at least one message frame for setup of a sensing measurement procedure from a WLAN-sensing initiator, wherein the at least one message frame respectively corresponds to at least one sensing measurement procedure, each of the at least one sensing measurement procedure comprises at least one sensing measurement event, and the message frame corresponding to each of the at least one sensing measurement procedure comprises information associated with the at least one sensing measurement event of the corresponding sensing measurement procedure; and performing WLAN sensing measurement based on the at least one message frame.

A communication apparatus is provided according to an exemplary embodiment of the present disclosure. The communication apparatus may be applied to a wireless local area network (WLAN)-sensing initiator and comprises a processing module configured to determine at least one message frame for setup of a sensing measurement procedure, wherein the at least one message frame respectively corresponds to at least one sensing measurement procedure, each of the at least one sensing measurement procedure comprises at least one sensing measurement event, and the message frame corresponding to each of the at least one sensing measurement procedure includes information associated with the at least one sensing measurement event of the corresponding sensing measurement procedure; and a transceiving module configured to transmit the at least one message frame.

A communication apparatus is provided according to an exemplary embodiment of the present disclosure. The communication apparatus may be applied to a wireless local area network (WLAN)-sensing responder and comprises: a transceiving module configured to receive at least one message frame for setup of a sensing measurement procedure from a WLAN-sensing initiator, wherein the at least one message frame respectively corresponds to at least one sensing measurement procedure, each of the at least one sensing measurement procedure comprises at least one sensing measurement event, and the message frame corresponding to each of the at least one sensing measurement procedure includes information associated with the at least one sensing measurement event of the corresponding sensing measurement procedure; and a processing module configured to control execution of WLAN sensing measurement based on the at least one message frame.

An electronic device is provided according to an exemplary embodiment of the present disclosure. The electronic device includes a storage, a processor, and computer programs stored on the storage and executable on the processor. The processor, when executing the computer programs, implements the methods as described above.

A computer-readable storage medium is provided according to an exemplary embodiment of the present disclosure. The computer readable storage medium has computer programs stored thereon which when executed by a processor, implement the methods as described above.

The technical schemes provided by the exemplary embodiments of the present disclosure can enable different measurement modes in different sensing measurement events, enabling the WLAN sensing measurement procedure to be performed.

### BRIEF DESCRIPTION OF DRAWINGS

The foregoing and other features of the embodiments of the present disclosure will become more apparent by describing in detail exemplary embodiments of the disclosure with reference to the accompanying drawings, where:
FIG. 1 illustrates an exemplary manner of WLAN sensing.
FIG. 2 is a flowchart illustrating a communication method according to an exemplary embodiment.
FIG. 3 is a schematic diagram illustrating a flow of a WLAN sensing scenario according to an exemplary embodiment.
FIG. 4 is a flowchart illustrating another communication method according to an exemplary embodiment.
FIG. 5 is a block diagram illustrating a communication apparatus according to an exemplary embodiment.

### DETAILED DESCRIPTION

The following description, with reference to the accompanying drawings, is provided to facilitate a thorough understanding of various embodiments of the present disclosure as defined by the appended claims and their equivalents. The various embodiments of the present disclosure include various specific details, but these specific details are to be considered exemplary only. In addition, for clarity and conciseness, descriptions of commonly-known techniques, functions, and constructions may be omitted.

The terms and words used in the present disclosure are not limited to the written meaning, but are used only by the inventor to enable a clear and consistent understanding of the present disclosure. Thus, for those skilled in the art, the description of the various embodiments of the disclosure is provided for purposes of illustration only and not for purposes of limitation.

It is to be understood that the singular forms "a", "an", "said" and "the" as used herein are intended to include the plural forms as well, unless the context clearly dictates otherwise. It should be further understood that the term "comprising", when used in this disclosure, indicates the presence of described features, integers, steps, operations, elements, and/or components, but does not preclude the presence or addition of one or more other features, integers, steps, operations, elements, components, and/or groups thereof.

It will be understood that, although the terms "first", "second", etc. may be used herein to describe various elements, these elements should not be limited by these terms. These terms are used only to distinguish one element from another. Accordingly, without departing from the teachings of the exemplary embodiments, the first element discussed below may be referred to as the second element.

It should be understood that when an element is referred to as being "connected" or "coupled" to another element, it may be directly connected or coupled to the other element, or there can also be intermediate components. Furthermore, "connected" or "coupled" as used herein may include wireless connection or wireless coupling. As used herein, the term "and/or" or expression "at least one of..." includes any and all combinations of one or more of the associated listed items.

Unless defined otherwise, all terms, including technical terms and scientific terms, used herein have the same meaning as commonly understood by one of ordinary skill in the art to which the present disclosure belongs.

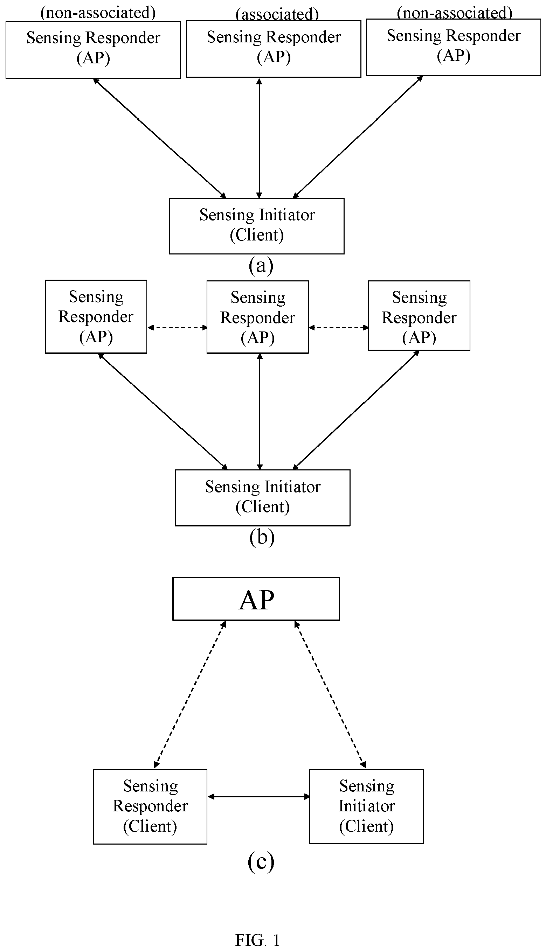

FIG. 1 illustrates an exemplary manner of WLAN sensing.

The process of WLAN sensing may be that an initiator initiates WLAN sensing (for example, initiates a WLAN sensing session), there may be a plurality of responders to respond to it, and specific possible manners may be as shown in (a), (b) and (c) of FIG. 1.

Referring to FIG. 1 (a), when a WLAN-sensing initiator (e.g., a client) initiates WLAN sensing, a plurality of associated or non-associated WLAN-sensing responders (e.g., three access points (APs)) may respond. Here, "associated" may mean that an associated connection for communication has been set up between the initiator and the responder, and "non-associated" may mean that no associated connection for communication has been set up between the initiator and the responder.

As an example, the client may include, but is not limited to, a cellular phone, a smart phone, a wearable device, a computer, a personal digital assistant (PDA), a personal communication system (PCS) device, a personal information manager (PIM), a personal navigation device (PND), a global positioning system, a multimedia device, an Internet of Things (IoT) device, etc.

An AP may be a wireless switch for wireless network, and also an access device for wireless network. The AP may include software applications and/or circuits to enable other types of nodes in the wireless network to communicate with the outside or inside of the wireless network through the AP. As an example, the AP may be a terminal or a network device equipped with a wireless fidelity (Wi-Fi) chip.

FIG. 1 (b) is similar to FIG. 1 (a), but in FIG. 1 (b), each responder (AP) can communicate with each other.

Referring to FIG. 1 (c), the WLAN-sensing initiator and the WLAN-sensing responder may both be clients, and they may communicate by connecting to the same AP.

Although it is illustrated in FIG. 1 (a), (b), and (c) that a client may act as an initiator and an AP may act as a responder, the present disclosure is not limited to this. For example, an AP may act as an initiator and a client may act as a responder. In addition, the number of initiators and responders is not limited to that shown in FIG. 1 (a), (b), and (c).

A WLAN-sensing session initiated by an initiator may include one or more of the following phases: a setup phase, a measurement phase, a reporting phase and a termination phase.

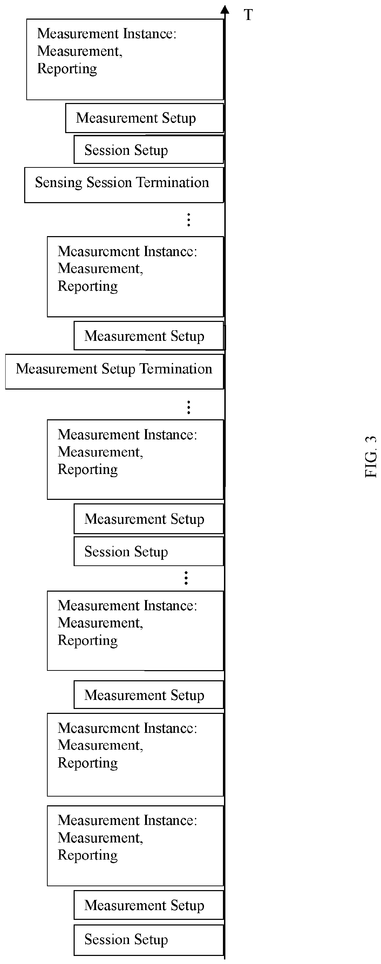

In the setup phase, a sensing session is set up (shown as "session setup" in FIG. 3), and operating parameters associated with the sensing session are determined and exchanged between devices. After the setup of the sensing session is completed, a setup of a sensing measurement ("measurement setup" as shown in FIG. 3) is conducted, thereby entering the measurement phase to perform the sensing measurement. In the reporting phase, a sensing measurement result may be reported. In the termination phase, the device stops performing measurement and terminates the sensing session ("sensing session termination" as shown in FIG. 3).

The measurement phase (or "measurement procedure") may include a plurality of sensing measurement events. For example, a triggered-based (TB) sensing measurement event may include two modes: a trigger frame (TF) sounding mode (hereinafter may be referred to as "TF sounding") and a null data packet announcement (NDPA) sounding mode (hereinafter may be referred to as "NDPA sounding"). Different sensing measurement events may use only one of these two modes or use both of these two modes for sensing measurement. However, in current research, there is no corresponding mechanism to define which modes different sensing measurement events use and in which order that the modes are used, thus affecting the WLAN sensing measurement procedure.

In view of this, the concept according to an embodiment of the present disclosure provides a communication method and a communication apparatus for WLAN sensing measurement.

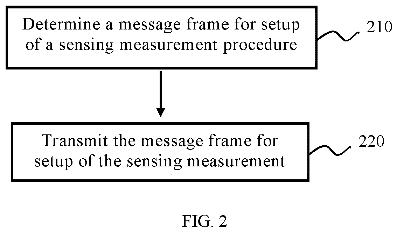

FIG. 2 is a flowchart illustrating a communication method according to an exemplary embodiment. The communication method shown in FIG. 2 may be applied to a WLAN-sensing initiator.

Referring to FIG. 2, in step 210, at least one message frame for setup of a sensing measurement procedure may be determined. According to an embodiment of the present disclosure, the at least one message frame for setup of a sensing measurement procedure may respectively correspond to at least one sensing measurement procedure, each of the at least one sensing measurement procedure may include at least one sensing measurement event, and the message frame corresponding to each of the at least one sensing measurement procedure may include information associated with the at least one sensing measurement event of the corresponding sensing measurement procedure.

For example, a sensing measurement procedure requires a message frame for setup of a sensing measurement procedure for setting up sensing measurement. In an embodiment of the present disclosure, one or more message frames for setup of a sensing measurement procedure may be determined at the same time in step 210, that is, one or more sensing measurement procedures are set up simultaneously, and in the following time, each sensing measurement procedure is sequentially performed according to the order in which it was setup. As shown in FIG. 3, after one "session setup", there may be one or more "measurement setups".

In each sensing measurement procedure, one or more sensing measurement events may be included, such as "measurement instances" shown in FIG. 3. In each sensing measurement event, there may be a transmitter and a receiver for sensing measurement. For example, the sensing measurement is implemented by performing TF sounding and/or NDPA sounding between the transmitter and the receiver. For example, the WLAN-sensing initiator may be a participant in the sensing measurement event, such as a transmitter of the sensing measurement event; and for another example, the WLAN-sensing initiator may not be a participant in the sensing measurement event, that is, the WLAN-sensing initiator is neither a transmitter nor a receiver. Further, it will be understood that although FIG. 3 shows the presence of "measurement" and "reporting" in a "measurement instance", the disclosure is not limited to this, for example, each "measurement instance" may only include "measurement," and then the "reporting" may be performed according to a message frame further sent by the transmitter.

According to an embodiment of the present disclosure, the at least one message frame for setup of a sensing measurement procedure determined in step 210 may be any type of frame, for example, a management frame, a control frame, or a data frame, which is not specifically limited by the present disclosure. In an embodiment of the present disclosure, there may be many modes to determine a message frame for setup of a sensing measurement procedure. For example, a message frame for setup of a sensing measurement procedure may be generated or configured according to at least one of the following conditions: channel state, network condition, load condition, hardware capability of the sending/receiving device, service type, and relevant protocol provision, which are not specifically limited in the embodiments of the present disclosure. In an embodiment of the present disclosure, the message frame for setup of a sensing measurement procedure may further be obtained from an external device, which is not specifically limited in the embodiment of the present disclosure.

The specific content of the message frame for setup of a sensing measurement procedure will be described in detail in the following.

As described above, there may be a plurality of sensing measurement procedures, and each sensing measurement procedure may have a corresponding message frame for setup of a sensing measurement procedure, so in order to distinguish each sensing measurement procedure, a sensing measurement procedure identifier may be present in the message frame for setup of a sensing measurement procedure. That is, each message frame for setup of a sensing measurement procedure may include a sensing measurement procedure identifier for identifying a sensing measurement procedure corresponding to the message frame, for example, which may be referred to as a "measurement procedure ID" hereinafter.

As described above, each message frame for setup of a sensing measurement procedure may include information associated with at least one sensing measurement event. According to an embodiment of the present disclosure, the information associated with the at least one sensing measurement event comprises, for each of the at least one sensing measurement event, at least one of:
a sensing measurement event identifier for identifying the corresponding sensing measurement event;
a first identifier for identifying a transmitter of the corresponding sensing measurement event;
a second identifier for identifying a receiver of the corresponding sensing measurement event;
a third identifier for identifying a sensing measurement method used by the corresponding sensing measurement event.

Each of the above items is described in detail in the following.

Each sensing measurement procedure includes at least one sensing measurement event, thus, the sensing measurement event identifier of each sensing measurement event may correspond to the measurement procedure. For example, specifically, each sensing measurement event identifier may be represented by "measurement procedure ID_measurement event ID".

The same user (device) may participate in different sensing measurement events. Each sensing measurement event may correspond to different devices, and depending on whether the WLAN-sensing initiator participates in the sensing measurement event, the first identifier and/or the second identifier included in the corresponding message frame for setup of a sensing measurement procedure may be determined.

For example, in a case where the WLAN-sensing initiator is not used as a transmitter or a receiver of each sensing measurement event, the information associated with at least one sensing measurement event may include, for each sensing measurement event, at least one first identifier and at least one second identifier corresponding to the sensing measurement event. In this case, for a sensing measurement event, the relationship between the first identifier which represents the transmitter in the sensing measurement event and the second identifier which represents the receiver in the sensing measurement event may be one-to-one (i.e., one first identifier corresponds to one second identifier (one transmitter corresponds to one receiver)), one-to-many (i.e., one first identifier corresponds to multiple second identifiers (one transmitter corresponds to multiple receivers)), or many-to-one (i.e., multiple first identifiers correspond to one second identifier (multiple transmitters correspond to one receiver)).

For example, in a case where the WLAN-sensing initiator is used as a transmitter of each sensing measurement event, the information associated with at least one sensing measurement event may include, for each sensing measurement event, at least one second identifier corresponding to the sensing measurement event. That is, in this case, one or more receivers may be identified in each sensing measurement event.

According to an embodiment of the present disclosure, in response to that the third identifiers in each sensing measurement event are set to different values, each sensing measurement event may employ different sensing measurement methods. In the following, the setting of the third identifier in a sensing measurement event is described as an example, and the description may be applied to any other sensing measurement event.

In an embodiment of the present disclosure, each sensing measurement event may employ a sounding mode for sensing measurement. For example, in response to that the third identifier is set to a first value, the sensing measurement method is identified as performing sensing measurement in a first sounding mode, and in response to that the third identifier is set to a second value, the sensing measurement method is identified as performing the sensing measurement in a second sounding mode.

According to an embodiment of the present disclosure, the first sounding mode is a TF sounding mode, and the second sounding scheme is an NDPA sounding mode, however, the present disclosure is not limited to this. According to an embodiment of the present disclosure, in TF sounding, a transmitter may transmit a TF frame (which may allocate resources for a receiver), and then the receiver may transmit a null data packet (NDP) frame to the transmitter, so that the transmitter may perform sensing measurement (e.g., Channel State Information (CSI) measurement); in NDPA sounding, there may be multiple receivers, and a transmitter may transmit an NDPA frame immediately followed by an NDP frame, and then each receiver may report feedback to the transmitter, thereby implementing sensing measurement.

For example, the third identifier may have two bits, and if it is set to a first value (e.g., but not limited to "00"), in the sensing measurement event, the sensing measurement may be performed in a first sounding mode (e.g., but not limited to "TF sounding"); if the third identifier is set to a second value (e.g., but not limited to "01"), in the sensing measurement event, the sensing measurement may be performed in a second sounding mode (e.g., but not limited to "NDPA sounding").

In another embodiment of the present disclosure, each sensing measurement event may employ a combination of at least two sounding modes for sensing measurement, and the third identifier may identify the order of each sounding mode. For example, in a case where the third identifier is set to a third value, the sensing measurement method is identified as first performing sensing measurement in a first sounding mode and then performing the sensing measurement in a second sounding mode; in a case where the third identifier is set to a fourth value, the sensing measurement method is identified as first performing the sensing measurement in the second sounding mode and then performing the sensing measurement in the first sounding mode. For example, as described above, the third identifier may have two bits, and if it is set to a third value (e.g., but not limited to "10"), the sensing measurement may first be performed in a first sounding mode (e.g., but not limited to "TF sounding") and then performed in a second sounding mode (e.g., but not limited to "NDPA sounding"), that is, in the sensing measurement event, a sensing measurement method of first performing TF sounding and then performing NDPA sounding may be used for sensing measurement; if the third identifier is set to a fourth value (e.g., but not limited to " 1 1"), in the sensing measurement event, the sensing measurement may first be performed in the second sounding mode (e.g., but not limited to "NDPA sounding") and then performed in the first sounding mode (e.g., but not limited to "TF sounding"), that is, in the sensing measurement event, a sensing measurement method of first performing NDPA sounding and then performing TF sounding may be used for sensing measurement.

According to an embodiment of the present disclosure, the WLAN-sensing initiator may generate a message frame for setup of a sensing measurement procedure, wherein the message frame for setup of a sensing measurement procedure may include:
A. a measurement procedure ID, wherein one message frame for setup of a sensing measurement procedure may correspond to one measurement procedure ID;
B. a plurality of measurement event IDs, wherein each measurement event ID may correspond to a measurement procedure ID, and may be in a specific form of "measurement procedure ID _measurement event ID";
C. a transmitter ID (the first identifier as described above) and/or a receiver ID (the second identifier as described above), wherein one measurement event ID corresponds to different devices, if the WLAN-sensing initiator is neither the transmitter nor the receiver of the sensing (sensing measurement event), the transmitter ID and the receiver ID participating in this sensing measurement event may be included, the corresponding relationship may be one-to-one, one-to-many, or many-to-one, such as a multicast address; if the WLAN-sensing initiator is used as a transmitter, one or more receiver IDs may be included;
D. the form of sounding (the third identifier as described above), for example, it may be identified with two bits, setting to 0 (00) to identify TF sounding, setting to 1 (01) to identify NDPA sounding, setting to 2 (10) to identify "first TF sounding, and then NDPA sounding", and setting to 3 (11) to identify "first NDPA sounding, and then TF sounding".

For a message frame for setup of a sensing measurement procedure, its included contents may be shown in the following Table 1:

**Table 1. Message frame for setup of a sensing measurement procedure**

| Information | Description |
|---|---|
| Measurement Procedure ID 1 | The message frame corresponding to the sensing measurement procedure 1 |
| Measurement Procedure ID 1_Measurement Event ID1 | Measurement event 1 in this sensing measurement procedure |
| transmitter ID 11 | Transmitter identifier in measurement event 1 |
| receiver ID 12 | Receiver identifier in measurement event 1 |
| sounding | Sensing measurement method applied by measurement event 1 |
| Measurement Procedure ID_Measurement Event ID2 | Measurement event 2 in this sensing measurement procedure |
| receiver ID 21 | Receiver identifier in measurement event 2 |
| receiver ID 22 | Receiver identifier in measurement event 2 |
| sounding | Sensing measurement method used by measuring event 2 |
| ...... | |

Although two sensing measurement events are shown in Table 1, the present disclosure is not limited to this, and Table 1 may include only one sensing measurement event, or more sensing measurement events. In addition, although only one transmitter identifier and one receiver identifier are shown for the sensing measurement event 1, the present disclosure is not limited to this. For example, as described above, the relationship between the transmitter identifier and the receiver identifier may be "one-to-one, one-to-many, or many-to-one".

Referring back to FIG. 2, in step 220, at least one message frame for setup of a sensing measurement procedure is transmitted. For example, as shown in FIG. 1, the WLAN-sensing initiator may send at least one message frame for setup of a sensing measurement procedure to at least one WLAN-sensing responder.

It is to be understood that the communication method shown in FIG. 2 is merely exemplary and the present disclosure is not limited to this. For example, the communication method illustrated in FIG. 2 may further include: setting, for each sensing measurement procedure, a sensing measurement clock corresponding to the sensing measurement procedure, wherein in response to that a corresponding sensing measurement clock expires, the corresponding sensing measurement procedure is deactivated.

For example, referring to Table 1, a sensing measurement clock corresponding to the sensing measurement procedure 1 may be set, and when the sensing measurement clock expires, the sensing measurement procedure 1 is deactivated, that is, each sensing measurement event (sensing measurement event 1, sensing measurement event 2, and the like) included in the sensing measurement procedure 1 is ended (or completed).

In addition, if the WLAN sensing procedure includes a plurality of sensing measurement procedures (for example, a plurality of message frames for setup of sensing measurement procedure are determined in step 210), a WLAN sensing procedure clock may be set, the WLAN sensing procedure clock may include a plurality of sensing measurement clocks, and if the corresponding sensing measurement clock expires, the sensing measurement procedure that was set up with it should also be deactivated. This enables WLAN sensing within a defined clock cycle, while also reducing interference with other devices.

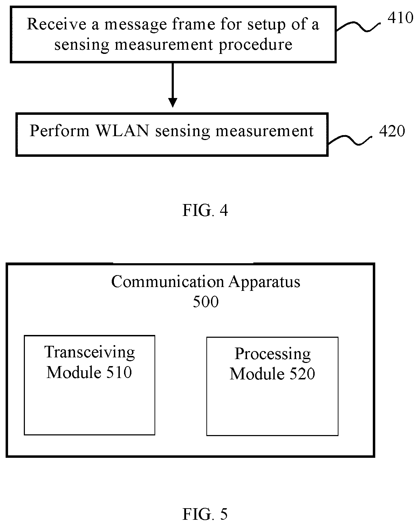

FIG. 4 is a flowchart illustrating another communication method according to an exemplary embodiment. The communication method shown in FIG. 4 may be applied to a WLAN-sensing responder.

Referring to FIG. 4, in step 410, at least one message frame for setup of a sensing measurement procedure may be received from a WLAN-sensing initiator, wherein the at least one message frame may respectively correspond to at least one sensing measurement procedure, each sensing measurement procedure may include at least one sensing measurement event, each message frame corresponding to each of the at least one sensing measurement procedure may include information associated with at least one sensing measurement event of the corresponding procedure.

According to an embodiment of the present disclosure, each sensing measurement procedure corresponds to a sensing measurement clock, wherein in response to a corresponding sensing measurement clock expires, the corresponding sensing measurement procedure is deactivated.

According to an embodiment of the present disclosure, each message frame for setup of a sensing measurement procedure may further include a sensing measurement procedure identifier for identifying the sensing measurement procedure corresponding to the message frame for setup of a sensing measurement procedure.

According to an embodiment of the present disclosure, the information associated with the at least one sensing measurement event may include, for each of the at least one sensing measurement event, at least one of:
a sensing measurement event identifier for identifying the corresponding sensing measurement event;
a first identifier for identifying a transmitter of the corresponding sensing measurement event;
a second identifier for identifying a receiver of the corresponding sensing measurement event;
a third identifier for identifying a sensing measurement method used by the corresponding sensing measurement event.

According to an embodiment of the present disclosure, in a case where a WLAN-sensing initiator is not used as a transmitter or a receiver of each sensing measurement event, the information associated with at least one sensing measurement event may include, for each of the at least one sensing measurement event, at least one first identifier and at least one second identifier corresponding to the sensing measurement event.

According to an embodiment of the present disclosure, in a case where a WLAN-sensing initiator is used as a transmitter of each sensing measurement event, the information associated with at least one sensing measurement event may include, for each of the at least one sensing measurement event, at least one second identifier corresponding to the sensing measurement event.

According to an embodiment of the present disclosure, in response to the third identifier is set to a first value, the sensing measurement method is identified as performing sensing measurement in a first sounding mode, and in response to the third identifier is set to a second value, the sensing measurement method is identified as performing sensing measurement in a second sounding mode.

According to an embodiment of the present disclosure, in response to that the third identifier is set to a third value, the sensing measurement method is identified as first performing sensing measurement in a first sounding mode and then performing sensing measurement in a second sounding mode;

in response to that the third identifier is set to a fourth value, the sensing measurement method is identified as first performing the sensing measurement in the second sounding mode and then performing the sensing measurement in the first sounding mode.

According to an embodiment of the present disclosure, the first sounding mode is trigger frame (TF) sounding, and the second sounding mode is null data packet announcement (NDPA) sounding.

Each of the above embodiments described with reference to FIG. 2 and Table 1 with respect to "sensing measurement procedure identifier, sensing measurement event identifier, first identifier, second identifier, third identifier, TF sounding, NDPA sounding ", etc. may be applied herein, and repeated description is omitted here for simplicity.

In step 420, WLAN sensing measurement may be performed based on at least one message frame for setup of a sensing measurement procedure. For example, according to information included in the at least one message frame for setup of a sensing measurement procedure, one or more sensing measurement events are performed in in one or more sensing measurement procedures, thereby implementing WLAN sensing.

FIG. 5 is a block diagram illustrating a communication apparatus according to an exemplary embodiment. The communication apparatus 500 in FIG. 5 may include a processing module 520 and a transceiving module 510. In an embodiment of the present disclosure, the communication apparatus 500 shown in FIG. 5 may be applied to a WLAN-sensing initiator; and in another embodiment of the present disclosure, the communication apparatus 500 shown in FIG. 5 may be applied to a WLAN-sensing responder.

In a case where the communication apparatus 500 shown in FIG. 5 may be applied to a WLAN-sensing initiator, the processing module 510 can be configured to determine at least one message frame for setup of a sensing measurement procedure, wherein the at least one message frame respectively corresponds to at least one sensing measurement procedure, each of the at least one sensing measurement procedure comprises at least one sensing measurement event, and the message frame corresponding to each of the at least one sensing measurement procedure includes information associated with the at least one sensing measurement event of the corresponding sensing measurement procedure; the transceiving module 520 may be configured to transmit the at least one message frame. That is, the communication apparatus 500 shown in FIG. 5 may perform the communication method described with reference to FIG. 2, and the embodiment described with reference to FIG. 2 and Table 1 may be applied to this. Repeated description is omitted here in order to avoid redundancy.

In a case where the communication apparatus 500 shown in FIG. 5 may be applied to a WLAN-sensing responder, the transceiving module 520 may be configured to receive at least one message frame for setup of a sensing measurement procedure from a WLAN-sensing initiator, wherein the at least one message frame respectively corresponds to at least one sensing measurement procedure, each of the at least one sensing measurement procedure includes at least one sensing measurement event, and the message frame corresponding to each of the at least one sensing measurement procedure includes information associated with the at least one sensing measurement event of the corresponding sensing measurement procedure; the processing module 510 may be configured to control the execution of WLAN sensing measurement based on at least one message frame for setup of a sensing measurement procedure. That is, the communication apparatus 500 shown in FIG. 5 may perform the communication method described with reference to FIG. 4, and each of the above embodiments described with reference to FIG. 2 and Table 1 with respect to "message frame for setup of a sensing measurement procedure and information associated with at least one sensing measurement event", etc. may be applied thereto. Repeated descriptions are omitted here in order to avoid redundancy.

It is to be understood that the communication apparatus 500 shown in FIG. 5 is merely exemplary, and embodiments of the present disclosure are not limited to this. For example, the communication apparatus 500 may also include other modules, such as a storage module, etc. In addition, various modules in the communication apparatus 500 may be combined into more complex modules or may be divided into more individual modules.

The communication method and the communication apparatus according to embodiments of the present disclosure can enable different measurement modes in different sensing measurement events, so that a WLAN sensing measurement procedure can be performed.

Based on the same principle as the methods provided by the embodiments of the present disclosure, an embodiment of the present disclosure further provides an electronic device comprising a processor and a memory, wherein the memory stores machine-readable instructions (may also be referred to as "computer programs"); the processor is used for executing the machine-readable instructions to implement the methods described with reference to FIG. 2 and FIG. 4.

An embodiment of the present disclosure further provides a computer-readable storage medium having computer programs stored thereon that, when executed by a processor, implements the methods described with reference to FIG. 2 and FIG. 4.

In an exemplary embodiment, the processor may be logic blocks, modules and circuits for implementing or executing various exemplary embodiments described in conjunction with the present disclosure, such as a Central Processing Unit (CPU), a general purpose processor, a Digital Signal Processor (DSP), Application Specific Integrated Circuit (ASIC), a Field Programmable Gate Array (FPGA), or other programmable logic devices, transistor logic devices, hardware components, or any combination thereof. The processor may also be a combination that implements computing functions, such as a combination comprising one or more microprocessors, a combination of a DSP and a microprocessor, and the like.

In an exemplary embodiment, the memory may be, for example, a Read Only Memory (ROM), a Random Access Memory (RAM), an Electrically Erasable Programmable Read Only Memory (EEPROM), a Compact Disc Read Only Memory (CD-ROM) or another disc storage (including a compact disc, a laser disc, an optical disc, a digital versatile disc, a blu-ray disc, and the like), disk storage medium or another magnetic storage device, or any other medium capable of being used to carry or store program codes in the form of instructions or data structures and capable of being accessed by a computer, but is not limited to this.

It should be understood that although the various steps in the flowcharts of the accompanying drawings are shown sequentially as indicated by the arrows, the steps are not necessarily executed sequentially in the order indicated by the arrows. Unless explicitly stated herein, the execution of these steps is not strictly limited in order, and these steps may be performed in other orders. In addition, at least a part of steps in the flowcharts of the accompanying drawings may include a plurality of sub-steps or phases, and these sub-steps or phases are not necessarily executed at the same time, but may be executed at different time; and their execution order is not necessarily sequential, but may be in rotation or alternate with at least a portion of other steps or sub-steps or phases of other steps.

Although the present disclosure has been illustrated and described with reference to certain embodiments of the present disclosure, those skilled in the art will understand that various changes in form and details may be made without departing from the scope of the present disclosure. Accordingly, the scope of the present disclosure should not be limited to the embodiments, but should be defined by the appended claims and their equivalents.

## Claims

1. A communication method for wireless local area network, WLAN, sensing measurement, the communication method being performed by a WLAN-sensing initiator and comprising:
determining at least one message frame for setup of a sensing measurement procedure, wherein the at least one message frame respectively corresponds to at least one sensing measurement procedure, each of the at least one sensing measurement procedure comprises at least one sensing measurement event, and the message frame corresponding to each of the at least one sensing measurement procedure comprises information associated with the at least one sensing measurement event of the corresponding sensing measurement procedure; and
transmitting the at least one message frame.

2. The communication method according to claim 1, wherein each of the at least one message frame further comprises a sensing measurement procedure identifier for identifying a sensing measurement procedure corresponding to the message frame.

3. The communication method according to claim 2, wherein the information associated with the at least one sensing measurement event comprises, for each of the at least one sensing measurement event, at least one of:
a sensing measurement event identifier for identifying the corresponding sensing measurement event;
a first identifier for identifying a transmitter of the corresponding sensing measurement event;
a second identifier for identifying a receiver of the corresponding sensing measurement event; or
a third identifier for identifying a sensing measurement method used by the corresponding sensing measurement event.

4. The communication method according to claim 3, wherein in a case where the WLAN-sensing initiator is not used as a transmitter or a receiver of each of the at least one sensing measurement event, the information associated with the at least one sensing measurement event comprises, for each of the at least one sensing measurement event, at least one first identifier and at least one second identifier corresponding to the sensing measurement event.

5. The communication method according to claim 3, wherein in a case where the WLAN-sensing initiator is used as a transmitter of each of the at least one sensing measurement event, the information associated with the at least one sensing measurement event comprises, for each of the at least one sensing measurement event, at least one second identifier corresponding to the sensing measurement event.

6. The communication method according to claim 3, wherein in response to that the third identifier is set to a first value, the sensing measurement method is identified as performing sensing measurement in a first sounding mode;
in response to that the third identifier is set to a second value, the sensing measurement method is identified as performing sensing measurement in a second sounding mode.

7. The communication method according to claim 3 or 6, wherein in response to that the third identifier is set to a third value, the sensing measurement method is identified as first performing sensing measurement in a first sounding mode and then performing sensing measurement in a second sounding mode;
in response to that the third identifier is set to a fourth value, the sensing measurement method is identified as first performing sensing measurement in the second sounding mode and then performing sensing measurement in the first sounding mode.

8. The communication method according to claim 7, wherein the first sounding mode is a trigger frame, TF, sounding mode, and the second sounding mode is a null data packet announcement, NDPA, sounding mode.

9. The communication method according to claim 1, wherein the communication method further comprises: setting, for each of the at least one sensing measurement procedure, a sensing measurement clock corresponding to the sensing measurement procedure,
wherein in response to that a corresponding sensing measurement clock expires, the corresponding sensing measurement procedure is deactivated.

10. A communication method for wireless local area network, WLAN, sensing measurement, the communication method being performed by a WLAN-sensing responder and comprising:
receiving at least one message frame for setup of a sensing measurement procedure from a WLAN-sensing initiator, wherein the at least one message frame respectively corresponds to at least one sensing measurement procedure, each of the at least one sensing measurement procedure comprises at least one sensing measurement event, and the message frame corresponding to each of the at least one sensing measurement procedure comprises information associated with the at least one sensing measurement event of the corresponding sensing measurement procedure; and
performing WLAN sensing measurement based on the at least one message frame.

11. The communication method according to claim 10, wherein each of the at least one message frame further comprises a sensing measurement procedure identifier for identifying a sensing measurement procedure corresponding to the message frame.

12. The communication method according to claim 11, wherein the information associated with the at least one sensing measurement event comprises, for each of the at least one sensing measurement event, at least one of:
a sensing measurement event identifier for identifying the corresponding sensing measurement event;
a first identifier for identifying a transmitter of the corresponding sensing measurement event;
a second identifier for identifying a receiver of the corresponding sensing measurement event; or
a third identifier for identifying a sensing measurement method used by the corresponding sensing measurement event.

13. The communication method according to claim 12, wherein in a case where the WLAN-sensing initiator is not used as a transmitter or a receiver of each of the at least one sensing measurement event, the information associated with the at least one sensing measurement event comprises, for each of the at least one sensing measurement event, at least one first identifier and at least one second identifier corresponding to the sensing measurement event.

14. The communication method according to claim 12, wherein in a case where the WLAN-sensing initiator is used as a transmitter of each of the at least one sensing measurement event, the information associated with the at least one sensing measurement event comprises, for each of the at least one sensing measurement event, at least one second identifier corresponding to the sensing measurement event.

15. The communication method according to claim 12, wherein in response to that the third identifier is set to a first value, the sensing measurement method is identified as performing sensing measurement in a first sounding mode;
in response to that the third identifier is set to a second value, the sensing measurement method is identified as performing sensing measurement in a second sounding mode.

16. The communication method according to claim 12 or 14, wherein in response to that the third identifier is set to a third value, the sensing measurement method is identified as first performing sensing measurement in a first sounding mode and then performing sensing measurement in a second sounding mode;
in response to that the third identifier is set to a fourth value, the sensing measurement method is identified as first performing sensing measurement in the second sounding mode and then performing sensing measurement in the first sounding mode.

17. The communication method according to claim 16, wherein the first sounding mode is trigger frame, TF, sounding and the second sounding mode is null data packet announcement, NDPA, sounding.

18. The communication method according to claim 10, wherein each of the at least one sensing measurement procedure corresponds to a sensing measurement clock,
wherein in response to that a corresponding sensing measurement clock expires, the corresponding sensing measurement procedure is deactivated.

19. A communication apparatus, being applied to a wireless local area network, WLAN, sensing initiator, and comprising:
a processing module configured to determine at least one message frame for setup of a sensing measurement procedure, wherein the at least one message frame respectively corresponds to at least one sensing measurement procedure, each of the at least one sensing measurement procedure comprises at least one sensing measurement event, and the message frame corresponding to each of the at least one sensing measurement procedure comprises information associated with the at least one sensing measurement event of the corresponding sensing measurement procedure; and
a transceiving module configured to transmit the at least one message frame.

20. A communication apparatus, being applied to a wireless local area network, WLAN, sensing responder, and comprising:
a transceiving module configured to receive at least one message frame for setup of a sensing measurement procedure from a WLAN-sensing initiator, wherein the at least one message frame respectively corresponds to at least one sensing measurement procedure, each of the at least one sensing measurement procedure comprises at least one sensing measurement event, and the message frame corresponding to each of the at least one sensing measurement procedure comprises information associated with the at least one sensing measurement event of the corresponding sensing measurement procedure; and
a processing module configured to, based on the at least one message frame, control execution of WLAN sensing measurement.

21. An electronic device comprising a storage, a processor and computer programs stored on the storage and executable by the processor, wherein the processor, when executing the computer programs, performs the method according to any one of claims 1 to 9 or any one of claims 10 to 18.

22. A computer-readable storage medium, wherein computer programs are stored on the computer-readable storage, and the computer programs are executed by a processor to perform the method according to any one of claims 1 to 9 or any one of claims 10 to 18.
